# EUROPÄISCHE PATENTANMELDUNG

(11) **EP 2 620 720 A1**
(43) Veröffentlichungstag der Anmeldung: **31.07.2013**
(21) Anmeldenummer: 13000619.0
(22) Anmeldetag: 27.03.2009
(51) Int. Cl.: F24J 2/52, H01L 31/04, H01L 31/042, H01L 31/048, F24J 2/46

(54) **Clip zur Bildung eines Anschlagelements auf einer Fläche**

(62) Teilanmeldung aus: 09775713.2
(71) Anmelder: Energiebüro AG, 8005 Zürich (CH)
(72) Erfinder: Meier Christian, 8003 Zürich (CH); Langenskiöld Eric, 8712 Stäfa (CH)
(74) Vertreter: Münch, Martin Walter

(57) **Zusammenfassung**

Die Erfindung betrifft einen Clip (9) zur Bildung eines Anschlagelements auf einer ersten Aussenfläche (11) eines ebenen, dünnwandigen plattenförmigen Bauteils (10) unter Befestigung desselben in einer in dieser Aussenfläche (11) angeordneten Öffnung (13), welche das Bauteil (10) durchdringt und in einer zweiten Aussenfläche (18) des Bauteils (10) endet, die im Wesentlichen parallel zur ersten Aussenfläche (11) ist,
umfassend zwei über einen Federabschnitt (14) federnd miteinander verbundene Schenkelabschnitte (15a, 15b), deren freie Enden in einem neutralen Zustand beabstandet voneinander sind und unter Überwindung der Federkraft des Federabschnitts (14) aufeinander zu bewegbar sind,
wobei die Schenkelabschnitte (15a, 15b) jeweils eine oder mehrere erste Anlageflächen (16) aufweisen, zur Anlage an der Aussenfläche (11) des Bauteils (10) bei bestimmungsgemässer Befestigung des Clips (9) am Bauteil (10), und wobei die ersten Anlageflächen (16) gemeinsam eine Anlageebene definieren,
wobei die freien Enden der Schenkelabschnitte (15a, 15b) jeweils in einem hakenartigen Befestigungsabschnitt (17) enden, welcher über die Anlageebene hinaus steht,
wobei die hakenartigen Befestigungsabschnitte (17) jeweils auf der Innenseite ihrer Hakenform eine zweite Anlagefläche (19), welche sich mit einem Abstand zu der durch die ersten Anlageflächen (16) definierten Anlageebene erstreckt, aufweisen, zur Anlage an der zweiten Aussenfläche (18) des Bauteils (10) bei bestimmungsgemässer Befestigung des Clips am Bauteil (10),
wobei die hakenartigen Befestigungsabschnitte (17) jeweils auf der Aussenseite ihrer Hakenform eine im Wesentlichen senkrecht zur Anlageebene verlaufende erste Anschlagfläche (20) aufweisen, zur Bildung eines Anschlags in der Öffnung (13) gegen ein Verschieben des jeweiligen Schenkelabschnitt (15a, 15b) in einer Richtung parallel zur Anlageebene bei bestimmungsgemässer Befestigung des Clips (9) am Bauteil (10),
und wobei die Schenkelabschnitte (15a, 15b) jeweils unterhalb der Anlageebene eine von der ersten Anschlagfläche (20) abgewandte, im Wesentlichen senkrecht zur Anlageebene verlaufende zweite Anschlagfläche (21) aufweisen, zur Bildung der Anschlagflächen des durch den Clip (9) bei bestimmungsgemässer Befestigung desselben auf der ersten Aussenfläche (11) des Bauteils (10) gebildeten Anschlagelements.

Mit dem erfindungsgemässen Clip wird es möglich, auf einfache Weise an beliebiger Stelle auf einer ebenen Aussenfläche eines dünnwandigen Bauteils ein werkzeuglos und mit einer Hand wieder entfernbares Anschlagelement zu bilden, ohne dass hierfür enge Toleranzen einzuhalten wären oder die Rückseite der Bauteilwandung zugänglich sein müsste.

## Beschreibung

### TECHNISCHES GEBIET

Die Erfindung betrifft einen Clip zur Bildung eines Anschlagelements auf einer Aussenfläche eines ebenen, dünnwandigen plattenförmigen Bauteils unter Befestigung desselben in einer in dieser Aussenfläche angeordneten Öffnung sowie ein Verfahren zur Bildung eines Anschlagelements auf einer ebenen Aussenfläche eines dünnwandigen Bauteils unter Verwendung des Clips gemäss den Oberbegriffen der unabhängigen Patentansprüche.

### STAND DER TECHNIK

Anschlagelemente dienen der Bildung eines Formschlusses zwischen zwei ansonsten in Anschlagrichtung relativ zueinander beweglichen Körperlichkeiten und werden beispielsweise bei der Installation von Solarmodulen auf Steildächern auf der Unterseite der Solarmodule angebracht, um ein Abrutschen in Richtung zur Traufkante hin zu verhindern. Dabei schlägt das Anschlagelement z.B. an einem Profilabschnitt an, auf welchem des jeweilige Solarmodul aufliegt.

Zur Bildung eines Anschlagelements auf einer Aussenfläche eines ebenen, dünnwandigen plattenförmigen Bauteils, wie z.B. die Unterseite des Rahmens eines Solarmoduls, ist es bekannt, Nieten oder Schrauben in einer Öffnung in der Aussenfläche zu befestigen oder Anschlagkörper wie Blechwinkel oder quader- oder zylinderförmige Körper mittels Schrauben oder Nieten oder mittels stoffschlüssiger Methoden wie Schweissen, Löten oder Kleben auf der Fläche zu befestigen. Soll ein Anschlagelement im Bereich eines Randes einer Aussenfläche gebildet werden, so ist es zu dem bekannt, ein schlüsselringähnliches Element so in einer Öffnung in der Aussenfläche anzuordnen, dass der Bereich des Bauteils, welcher sich zwischen der Öffnung und dem Rand befindet, innerhalb des Ringes angeordnet wird.

Diese zuletzt genannte Ausführungsform weist jedoch den Nachteil auf, dass das Anschlagelement nur im Randbereich eines ebenen, dünnwandigen plattenförmigen Bauteils gebildet werden kann. Die zuvor erwähnten Ausführungsformen, bei denen Nieten oder Schrauben als Anschlagelement oder zur Befestigung von Anschlagkörpern dienen, weisen den Nachteil auf, dass die Befestigungsöffnung im Bauteil und die Dimensionen der Niete oder der Schraube recht genau aufeinander abgestimmt sein müssen, um eine sichere Befestigung zu gewährleisten. Die Befestigung von Anschlagkörpern mittels stoffschlüssiger Befestigungsverfahren wiederum weist den Nachteil auf, dass diese spezielle Verfahrensschritte und Umgebungsbedingungen erfordern, welche insbesondere bei der Montage von grösseren Bauteilen im Freien, wie z.B. von Solarmodulen auf dem Dach eines Gebäudes, nicht oder nur mit grossem Aufwand durchzuführen bzw. zu gewährleisten sind. Ein weiterer Nachteil der erwähnten Anschlagelemente ist, dass diese abgesehen von Ausführungsformen, bei denen Schrauben zum Einsatz kommen, nicht mehr ohne Weiteres entfernbar sind. Zur Montage und Entfernung von Anschlagelementen mit Schraubbefestigung werden zudem Werkzeuge wie Schraubendreher oder Schraubenschlüssel benötigt, was diese Handlungen in schwierigen Installationssituationen, z.B. auf einem Gebäudedach, erschwert und eine Einhandinstallation bzw. Demontage verunmöglicht. Als weiterer Nachteil ergibt sich für Ausführungsformen mit Maschinenschrauben, dass beide Seiten der Befestigungsöffnung zugänglich sein müssen, damit die Mutter auf die Schraube aufgesetzt und beim Festziehen oder Lösen gehalten werden kann.

### DARSTELLUNG DER ERFINDUNG

Es stellt sich deshalb die Aufgabe ein Anschlagelement zur Verfügung zu stellen, welche die Nachteile des Standes der Technik nicht aufweist oder zumindest teilweise vermeidet. Insbesondere soll das Anschlagelement auch unter schwierigen Montagebedingungen ohne zusätzliche Hilfsmittel mit nur einer Hand an beliebiger Stelle in einer Öffnung in einer Aussenfläche eines ebenen, dünnwandigen plattenförmigen Bauteil befestigt werden können und dabei tolerant bezüglich der Dimensionierung der Öffnung sein. Auch soll es ohne Zuhilfenahme von Werkzeugen wieder entfernbar sein.

Diese Aufgabe wird durch den Clip gemäss Patentanspruch 1 und das Verfahren gemäss Anspruch 15 gelöst.

Demgemäss betrifft ein erster Aspekt der Erfindung einen Clip zur Bildung eines Anschlagelements auf einer Aussenfläche (anspruchsgemässe erste Aussenfläche) eines ebenen, dünnwandigen plattenförmigen Bauteils unter Befestigung des Clips in einer in dieser Aussenfläche angeordneten, insbesondere kreisrunden, rechteckigen oder langlochförmigen Öffnung, welche das Bauteil durchdringt und in einer anspruchsgemässen zweiten Aussenfläche des Bauteils endet, die im Wesentlichen parallel zur ersten Aussenfläche ist. Bevorzugterweise ist der Clip geeignet zur Bildung eines Anschlagelements für die beiden zuletzt beschriebenen Ausführungsformen der Anordnung gemäss dem ersten Aspekt der Erfindung.

Der Clip weist zwei über einen Federabschnitt federnd miteinander verbundene Schenkelabschnitte auf, deren freie Enden in einem neutralen, d.h. spannungsfreien Zustand beabstandet voneinander sind und ausgehend von diesem Zustand unter Überwindung der Federkraft des Federabschnitts aufeinander zu bewegbar sind, ähnlich wie die beiden Schenkel einer Pinzette.

Die Schenkelabschnitte weisen jeweils eine oder mehrere Anlageflächen auf (anspruchsgemässe erste Anlageflächen), welche zur Anlage an der Aussenfläche des Bauteils bei bestimmungsgemässer Befestigung des Clips am Bauteil vorgesehen sind. Diese anspruchsgemässen ersten Anlageflächen definieren gemeinsam eine Anlageebene, welche bei bestimmungsgemässer Anordnung des Clips am Bauteil mit der anspruchsgemässen ersten Aussenseite des Bauteils zusammenfällt.

Die freien Enden der Schenkelabschnitte enden jeweils in einem hakenartigen Befestigungsabschnitt, welcher über die zuvor erwähnte Anlageebene hinaus steht.

Auf der Innenseite ihrer Hakenform weisen die hakenartigen Befestigungsabschnitte jeweils eine anspruchsgemässe zweite Anlagefläche auf, welche sich mit einem Abstand zu der durch die anspruchsgemässen ersten Anlageflächen definierten Anlageebene erstreckt und bei bestimmungsgemässer Befestigung des Clips am Bauteil zur Anlage an der anspruchsgemässen zweiten Aussenfläche des Bauteils dient.

Auf der Aussenseite ihrer Hakenform weisen die hakenartigen Befestigungsabschnitte jeweils eine im Wesentlichen senkrecht zur Anlageebene verlaufende anspruchsgemässe erste Anschlagfläche auf, zur Bildung eines Anschlags in der Öffnung im Bauteil gegen ein Verschieben des jeweiligen Schenkelabschnitt in bestimmungsgemässer Anschlagrichtung parallel zur Anlageebene bei bestimmungsgemässer Befestigung des Clips am Bauteil.

Weiter weisen die Schenkelabschnitte jeweils unterhalb der Anlageebene eine von der anspruchsgemässen ersten Anschlagfläche abgewandte, im Wesentlichen senkrecht zur Anlageebene verlaufende anspruchsgemässe zweite Anschlagfläche auf, zur Bildung der Anschlagflächen des durch den Clip bei bestimmungsgemässer Befestigung desselben auf der anspruchsgemässen ersten Aussenfläche des Bauteils gebildeten Anschlagelements.

Mit dem erfindungsgemässen Clip wird es möglich, auf einfache Weise an beliebiger Stelle auf einer ebenen Aussenfläche eines dünnwandigen Bauteils ein werkzeuglos und mit einer Hand wieder entfernbares Anschlagelement zu bilden, ohne dass hierfür enge Toleranzen einzuhalten wären oder die Rückseite der Bauteilwandung zugänglich sein müsste.

In einer bevorzugten Ausführungsform des Clips weisen die Befestigungsabschnitte jeweils auf ihrer dem Federabschnitt zugewandten Seite, und zwar bevorzugterweise direkt anschliessend an die jeweilige anspruchsgemässe erste Anschlagfläche, eine weitere, anspruchsgemässe dritte Anlagefläche auf, welche sich mit einem Abstand zu der durch die anspruchsgemässen ersten Anlageflächen definierten Anlageebene erstreckt, zur Anlage an der anspruchsgemässen zweiten Aussenfläche des Bauteils bei bestimmungsgemässer Befestigung des Clips am Bauteil. Hierdurch lässt sich der Clip derartig in der Öffnung im Bauteil verriegeln, dass er für eine Demontage erst entgegen seiner Anschlagrichtung in der Öffnung bewegt werden muss, bevor seine Befestigungsabschnitte durch die Öffnung auf die von der anspruchsgemässen ersten Aussenfläche gebildete Seite des Bauteils zurückgeführt werden können.

In einer weiteren bevorzugten Ausführungsform des Clips ist es bevorzugt, dass die hakenartigen Befestigungsabschnitte jeweils auf der Aussenseite ihrer Hakenform eine gerundete, bevorzugterweise kreisabschnittsförmige Form aufweisen. Hierdurch wird erreicht, dass die Befestigungsabschnitte trotz guter Einführbarkeit in die Öffnung ein Maximum an Biegesteifigkeit aufweisen.

In noch einer weiteren bevorzugten Ausführungsform des Clips grenzen bei jedem Schenkelabschnitt die anspruchsgemässe zweite Anlagefläche und die anspruchsgemässe zweite Anschlagfläche direkt aneinander an. Dabei ist es bevorzugt, dass diese jeweils von senkrecht oder nahezu senkrecht zueinander verlaufenden geraden Kanten des jeweiligen Schenkelabschnitts gebildet werden. Auf diese Weise lassen sich unnötige Biegemomente und Schubkräfte in Richtungen quer zur Anschlagrichtung vermeiden.

In noch einer weiteren bevorzugten Ausführungsform des Clips werden jeweils die anspruchsgemässen ersten Anlageflächen von geraden Kanten der Schenkelabschnitte gebildet, so dass eine relativ grosse Anlagefläche zur Anlage an der ersten Aussenfläche des Bauteils bereitgestellt wird.

In noch einer weiteren bevorzugten Ausführungsform des Clips bilden die Schenkelabschnitte zusammen mit dem Federabschnitt eine einzige durchgehende anspruchsgemässe erste Anlagefläche. Durch diese Massnahme kann diese Anlagefläche maximiert werden, was bevorzugt ist, um möglichst geringe Flächenpressungen am Bauteil zu erhalten.

In noch einer weiteren bevorzugten Ausführungsform des Clips werden jeweils die anspruchsgemässen zweiten und/oder die anspruchsgemässen dritten Anlageflächen, sofern vorhanden, von geraden, mit einem Abstand parallel zur Anlageebene verlaufenden Kanten der Befestigungsabschnitte gebildet. Dies ist bevorzugt, um auch auf der anspruchsgemässen zweiten Aussenseite des Bauteils möglichst geringe Flächenpressungen zu erhalten.

In noch einer weiteren bevorzugten Ausführungsform des Clips ist der Federabschnitt von zwei voneinander bevorzugterweise parallel beabstandeten Federstegen gebildet. Hierdurch wird es möglich, bei ausreichender Festigkeit der Schenkelabschnitte und gewünschter Elastizität des Federabschnittes die Schenkelabschnitte und den Federabschnitt aus einem Halbzeugmaterial einheitlicher Materialstärke herzustellen, was bevorzugt ist.

In noch einer weiteren bevorzugten Ausführungsform des Clips sind die Schenkelabschnitte des Clip spiegelbildlich ausgebildet, so dass sich ein symmetrischer Aufbau des Clip ergibt.

In weiteren bevorzugten Ausführungsformen ist der Clip einstückig ausgebildet, sind seine Schenkelabschnitte als ebene, flächige Abschnitte mit gleichbleibender Materialstärke ausgebildet und/oder ist der Clip aus einem Blechmaterial, insbesondere aus rostfreiem Stahl, gebildet. All diese Massnahmen begünstigen eine kostengünstige Herstellung des erfindungsgemässen Clips sowie im letztgenannten Fall auch eine gute Haltbarkeit desselben unter rauhen klimatischen Bedingungen.

In noch einer weiteren bevorzugten Ausführungsform des Clips ist dieser einstückig durch Ausstanzen eines die beiden Schenkelabschnitte und den Federabschnitt bildenden Stanzteils aus einem Blechmaterial und anschliessendes Biegen im Bereich des Federabschnittes hergestellt.

Dabei ist bevorzugterweise die Form des Stanzteils derartig gewählt, dass die Kontur der Unterseite des Stanzteils im Wesentlichen als Gegenkontur zur Kontur der Oberseite des Stanzteils ausgebildet ist, so dass die einzelnen Stanzteile beim aneinander gereihten Stanzen aus einem Materialband nur sehr wenig Abfallmaterial hinterlassen. Hierdurch lassen sich erfindungsgemässe Clips besonders kostengünstig in grossen Stückzahlen herstellen.

Ein zweiter Aspekt der Erfindung betrifft ein Verfahren zur Bildung eines Anschlagelements auf einer ebenen Aussenfläche eines dünnwandigen Bauteils. Das Verfahren umfasst die folgenden Verfahrensschritte:
a) Bereitstellen einer Öffnung in der Aussenfläche des Bauteils, welche die Wandung des Bauteils durchdringt;
b) Bereitstellen eines Clips gemäss dem ersten Aspekt der Erfindung; und
c) Anordnen der Befestigungsabschnitte des Clips unter einem Aufeinanderzubewegen der Schenkelabschnitte entgegen der Federkraft des Federabschnitts derartig in der Öffnung des Bauteils, dass zumindest ein Teil der anspruchsgemässen ersten Anlageflächen des Clip an der Aussenfläche des Bauteils (anspruchsgemässe erste Aussenfläche des Bauteils) anliegen und die anspruchsgemässen zweiten Anlageflächen an der anderen Seite der Wandung des Bauteils, in welche die Öffnung mündet (anspruchsgemässe zweite Aussenfläche), anliegen.

Mit dem erfindungsgemässen Verfahren lässt sich auf einfache und sicherer Weise ein mit einer Hand werkzeuglos installierbares und wieder entfernbares Anschlagelement auf einer ebenen Aussenfläche eines dünnwandigen Bauteils, z.B. auf der Unterseite eines die Begrenzungskanten eines Solarmoduls bildenden Rahmens aus einem Hohl- oder C-Profilmaterial, bilden.

### KURZE BESCHREIBUNG DER ZEICHNUNGEN

Weitere Ausgestaltungen, Vorteile und Anwendungen der Erfindung ergeben sich aus den abhängigen Ansprüchen und aus der nun folgenden Beschreibung anhand der Figuren. Dabei zeigen:
Die Figuren 1 bis 10 verschiedene Darstellungen von zwei unterschiedlichen Anordnungen für die Befestigung von mehreren Solarmodulen auf einem Steildach eines Gebäudes, bei welchen erfindungsgemässe Clips als Anschlagelemente zum Einsatz kommen;
Fig. 11 eine Seitenansicht eines ersten erfindungsgemässen Clips;
Fig. 12 eine Draufsicht auf den Clip aus Fig. 11;
Fig. 13 den Clip aus den Figuren 11 und 12 in einer bestimmungsgemässen Einbausituation;
Fig. 14 eine Draufsicht auf ein Stanzteil zur Bildung des Clips aus den Figuren 11 bis 13;
Fig. 15 eine Draufsicht auf ein Zwischenprodukt bei der Herstellung des Stanzteiles aus Fig. 14;
Fig. 16 eine Seitenansicht eines zweiten erfindungsgemässen Clips;
Fig. 17 den Clip aus Fig. 16 in einer bestimmungsgemässen Einbausituation;
Fig. 18 eine Draufsicht auf ein Stanzteil zur Bildung des Clips aus den Figuren 16 und 17;
Fig. 19 eine Seitenansicht eines dritten erfindungsgemässen Clips; und
Fig. 20 eine Draufsicht auf den Clip aus Fig. 19.

### WEGE ZUR AUSFÜHRUNG DER ERFINDUNG

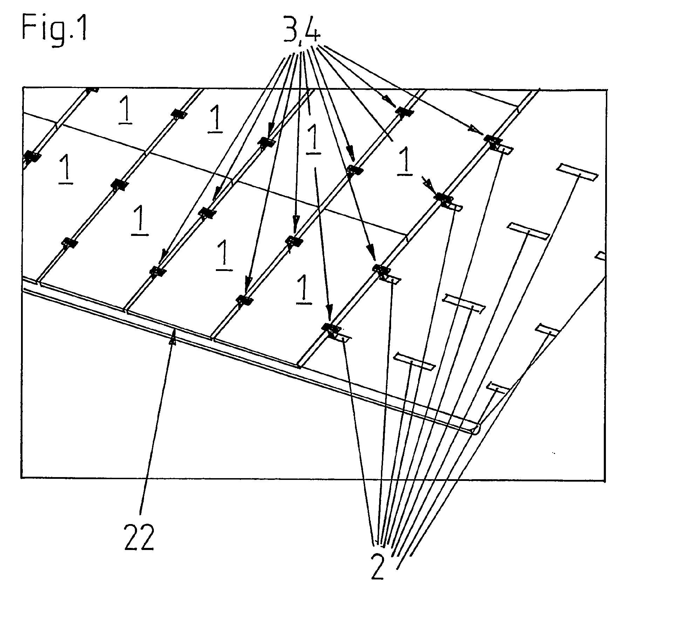

Eine erste Anordnung für die Befestigung von mehreren Solarmodulen zur Bildung eines Solarfeldes ist in Fig. 1 während ihrer Erstellung auf einem Steildach eines Gebäudes in einer perspektivischen Draufsicht gezeigt. Wie insbesondere im rechten Bereich des dargestellten Daches zu erkennen ist, in welchem die Anordnung noch nicht fertiggestellt ist, umfasst diese mehrere Trägerprofilteilstücke 2, die beabstandet voneinander in parallel zur Traufkante 22 des Daches verlaufenden Reihen angeordnet sind. Jedes Trägerprofilteilstück 2 trägt ein Klammerelement 3, 4, mit welchem jeweils zwei benachbarte Solarmodule 1 auf dem das Klammerelement 3, 4 tragenden Trägerprofilteilstück 2 befestigt sind, indem die sich gegenüberliegenden und quer zum Trägerprofilteilstück 2 verlaufenden Begrenzungskanten der beiden Solarmodule 2, welche beidseitig an das Klammerelement 3, 4 angrenzen, vom Klammerelement 3, 4 übergriffen werden und dadurch formschlüssig gegen ein Abheben vom Trägerprofilteilstück 2 gesichert werden.

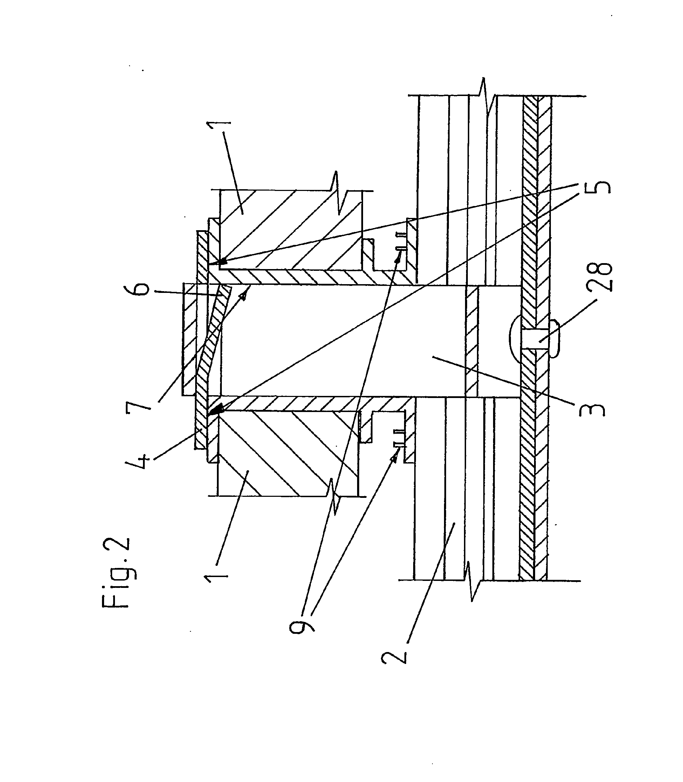

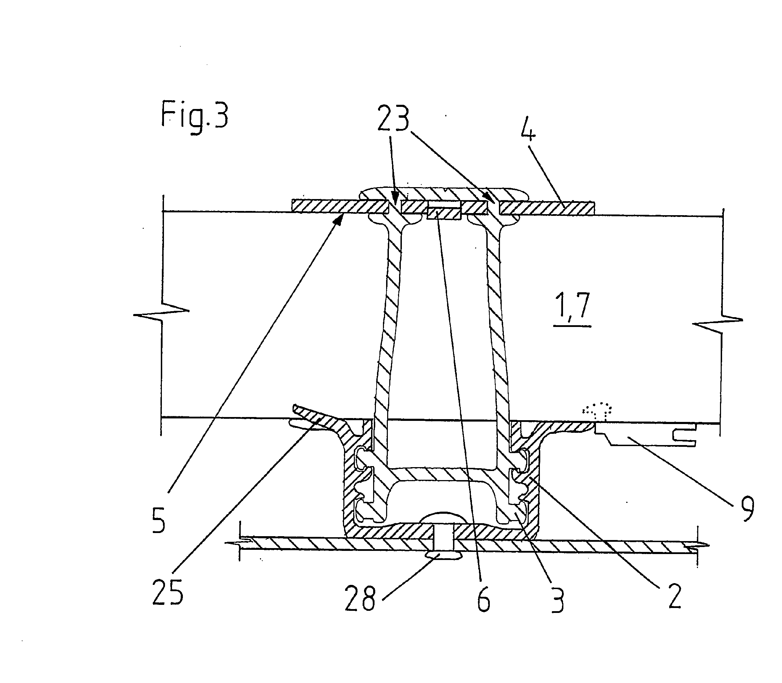

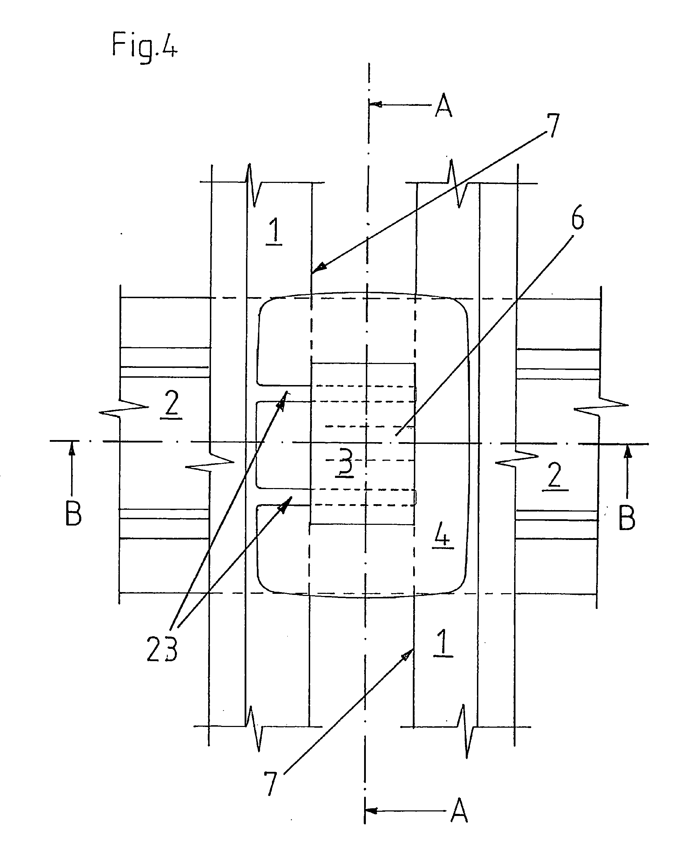

Wie in Zusammenschau mit den Figuren 2, 3 und 4 erkennbar ist, welche einen Vertikalschnitt in Längsrichtung der Trägerprofilteilstücke 2 durch eines der Klammerelemente 3, 4 (Fig. 2), quer zur Längsrichtung der Trägerprofilteilstücke 2 durch eines der Klammerelemente 3, 4 (Fig. 3) sowie eine Draufsicht auf eines der Klammerelemente 3, 4 (Fig. 4) zeigen, bestehen die Klammerelemente 3, 4 jeweils aus einem Stegelement 3, welches zwischen den Begrenzungskanten der Solarmodule 2 angeordnet ist und aus einem separat vom Stegelement ausgebildeten Kopfelement 4 zum Übergreifen der Begrenzungskanten der Solarmodule 2.

Die Stegelemente 3 sind als Profilabschnitte ausgebildet und sind jeweils mit ihrer Profillängsrichtung in Längsrichtung des jeweiligen sie tragenden Trägerprofilteilstücks 2 orientiert. An ihren unteren Enden sind die Stegelemente 3 jeweils formschlüssig am Trägerprofilteilstück 2 befestigt, indem sie mit von ihnen gebildeten Profilkonturen in Profilabschnitte des Trägerprofilteilstücks 2 eingreifen. Dabei sind die Stegelemente 3 und die Trägerprofilteilstücke 2 derartig ausgebildet, dass die Stegelemente 3 zur Befestigung am jeweiligen Trägerprofilteilstück 2 in Profillängsrichtung des Trägerprofilteilstücks 2 in dieses eingeschoben werden müssen.

Die Kopfelemente 4 sind im Bereich des oberen Endes des sie tragenden Stegelements 3 formschlüssig an diesem Stegelement 3 befestigt, indem sie jeweils in Profillängsrichtung des Stegelements 3 in Profilkonturen des Stegelements 3 eingeschoben sind und dabei in Profillängsrichtung des Stegelements 3 beidseitig über das Stegelement 3 überstehen, zum Übergreifen der Begrenzungskanten der zu befestigenden Solarmodule 1.

Die Trägerprofilteilstücke 2 sind jeweils mittig im Profil mit mehreren Nieten 28 auf der aus Blech gebildeten Dachoberseite befestigt.

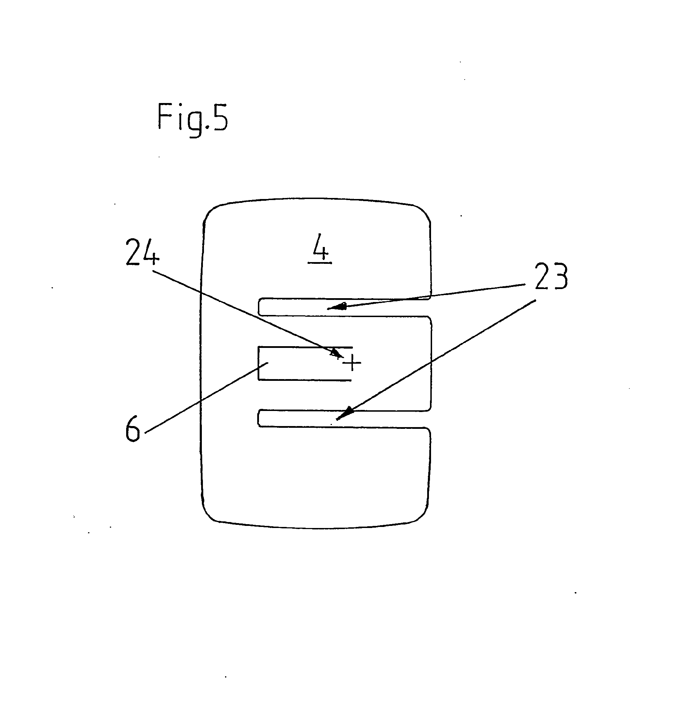

Wie in weiterer Zusammenschau mit Fig. 5 zu erkennen ist, welche eine Draufsicht auf eines der Kopfelemente 4 zeigt, sind die Kopfelemente 4 als plattenförmige Stanzteile aus Aluminium-Blechmaterial ausgebildet und derartig dimensioniert, dass mit jedem Klammerelement 3, 4 auch wahlweise zwei längs auf dem jeweiligen Trägerprofilteilstück 2 verlaufende Begrenzungskanten zweier benachbarter Solarmodule 1 übergriffen werden könnten, zur formschlüssigen Sicherung gegen ein Abheben vom Trägerprofilteilstück 2.

Diejenigen Bereiche der Kopfelemente 4, welche zum Übergreifen der Begrenzungskanten der Solarmodule 1 über das sie tragende Stegelement 3 überstehen, weisen an ihren Unterseiten Angrenzungsflächen 5 auf, welche an die Oberseiten der Begrenzungskanten der Solarmodule 1 angrenzen und diese dadurch auf den Trägerprofilteilstücken 2 halten. Diese Angrenzungsflächen 5 definieren bei jedem Kopfelement 4 eine Ebene.

Wie insbesondere aus den Figuren 3 bis 5 erkennbar ist, weisen die Kopfelemente 4 jeweils zwei Schlitze 23 auf, welche derartig angeordnet und ausgebildet sind, dass das Kopfelement 4 bei der Montage durch Einschieben in das zugehörige Stegelement 3 in seiner bestimmungsgemässen Endposition mit den Endflächen der Schlitze 23 an der Stirnseite des Stegelements 3 anschlägt.

Unterhalb der von seinen Angrenzungsflächen 5 definierten Ebene weist jedes Kopfelement 4 einen nach unten vorstehenden und entgegen der Einschieberichtung in das zugehörige Stegelement 3 wirkenden Anschlag 6 auf, der als gestanzte Blechnase 6 einstückig mit dem Kopfelement 4 ausgebildet ist und an die Stirnseite 7 einer quer zum zugehörigen Trägerprofilteilstück 2 verlaufenden Begrenzungskante eines mit diesem Kopfelement 4 befestigten Solarmoduls 1 angrenzt. Hierdurch werden die Kopfelemente 4 bei installierten Solarmodulen 1 in einer Richtung entgegen ihrer Einschieberichtung in ihrer bestimmungsgemässen Position gesichert.

Wie in Fig. 5 erkennbar ist, weisen die Kopfelemente 4 auf ihrer Oberseite eine Markierung 24. Diese Markierung 24 gibt an, an welcher Stelle eine Bohrung mit einem Durchmesser entsprechend der Breite der Blechnase 6 in das Kopfelement 4 einzubringen ist für den Fall, dass der durch die Blechnase 6 gebildete Anschlag unwirksam gemacht werden soll. Da sich die Kopfelemente 4 jeweils ausschliesslich oberhalb der von ihren Angrenzungsflächen 5 definierten Ebene erstrecken, können diese, nachdem der Anschlag 6 durch Einbringen der Bohrung unwirksam gemacht ist, bei installierten Solarmodulen 1 durch Verschieben entgegen ihrer Einschieberichtung vom jeweiligen sie tragenden Stegelement 3 entfernt werden. Hierdurch wird es möglich, einzelne Solarmodule 1 durch vorübergehendes Entfernen der jeweiligen das Solarmodul 1 haltenden Kopfelemente 4 auf einfache und schnelle Weise auszutauschen.

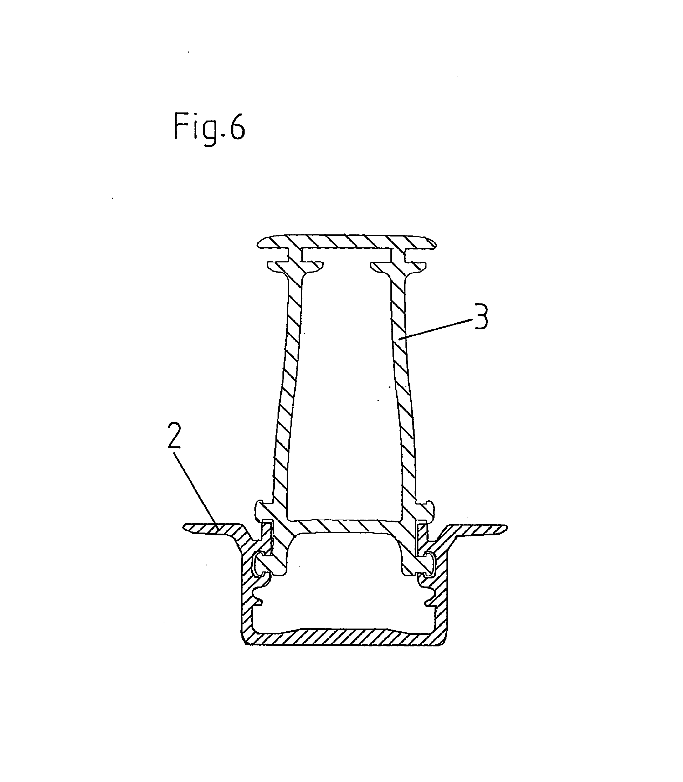

Wie weiter aus einer Zusammenschau der Fig. 3 mit der Fig. 6 zu erkennen ist, welche einen Vertikalschnitt quer zur Längsrichtung des Trägerprofils durch ein Trägerprofil und ein darin befestigtes Stegelement wie in der Anordnung aus Fig. 1 verwendet zeigt, sind die Trägerprofilteilstücke 2 und die Stegelemente 3 der Klammerelemente 3, 4 derartig ausgebildet, dass die Klammerelemente 3, 4 in mehreren verschiedenen Höhenpositionen in die Trägerprofilteilstücke (2) eingeschoben und/oder auf diese aufgeschoben werden können. Entsprechend eignen sich die gezeigten Trägerprofilteilstücke 2 und Klammerelemente 3, 4 grundsätzlich für zwei verschiedene Solarmoduldicken.

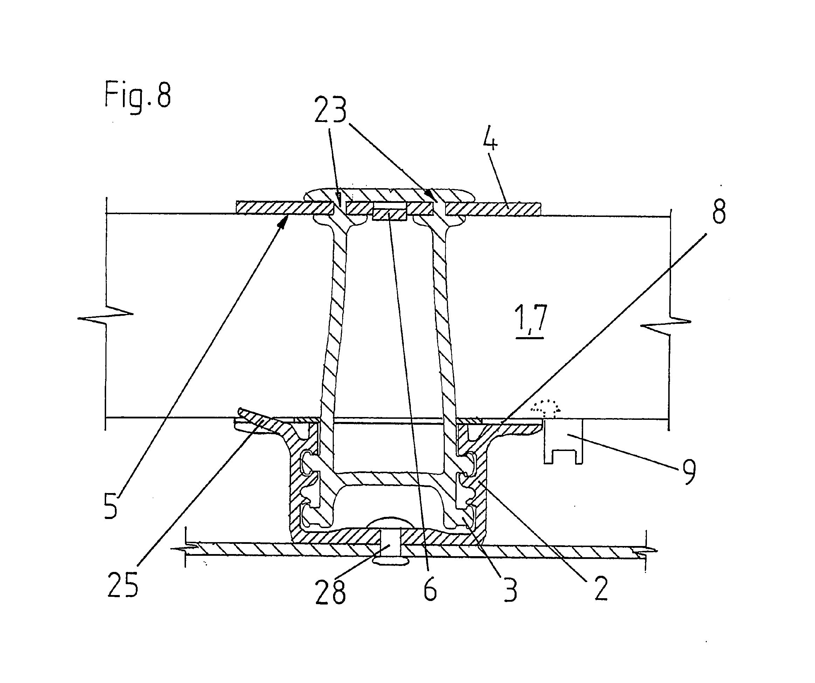

Wie aus Fig. 8 erkennbar wird, welche eine Darstellung wie Fig. 3 einer bevorzugten Ausführungsform der Anordnung zeigt, ist es zudem auch vorgesehen, zur Ermöglichung der Anpassung der erfindungsgemässe Anordnung an verschiedenste Solarmoduldicken je Klammerelement 3, 4 ein oder mehrere separat ausgebildete Einlageelemente 8 zwischen den Solarmodulen 1 und den Trägerprofilteilstücken 2 zu verwenden, welche im vorliegenden Fall als Einlageblech 8 ausgebildet sind und durch das jeweilige Stegelement 3 formschlüssig positioniert sind.

Wie weiter aus den Figuren 3 und 8 zu erkennen ist, sind die Solarmodule 1 jeweils durch eine gezielte plastische Verformung 25 eines Profilabschnitts des Trägerprofilteilstücks 2 im Bereich der Stirnflächen 7 ihrer Begrenzungskanten formschlüssig gegen ein Längsverschieben entlang dem jeweiligen Trägerprofilteilstück 2 gesichert. Hierzu weisen in der Ausführungsform gemäss Fig. 8 die Einlagebleche 8 entsprechende Ausschnitte auf, innerhalb welcher die plastische Verformung 25 des Profilabschnitts des Trägerprofilteilstücks 2 erfolgt. Hierdurch wird gleichzeitig auch die Einlageplatte 8 durch die plastische Verformung 25 formschlüssig am Längsverschieben entlang dem Trägerprofilteilstück 2 gehindert und, da diese das Stegelement 3 umschliesst, letztendlich auch das Klammerelement 3, 4.

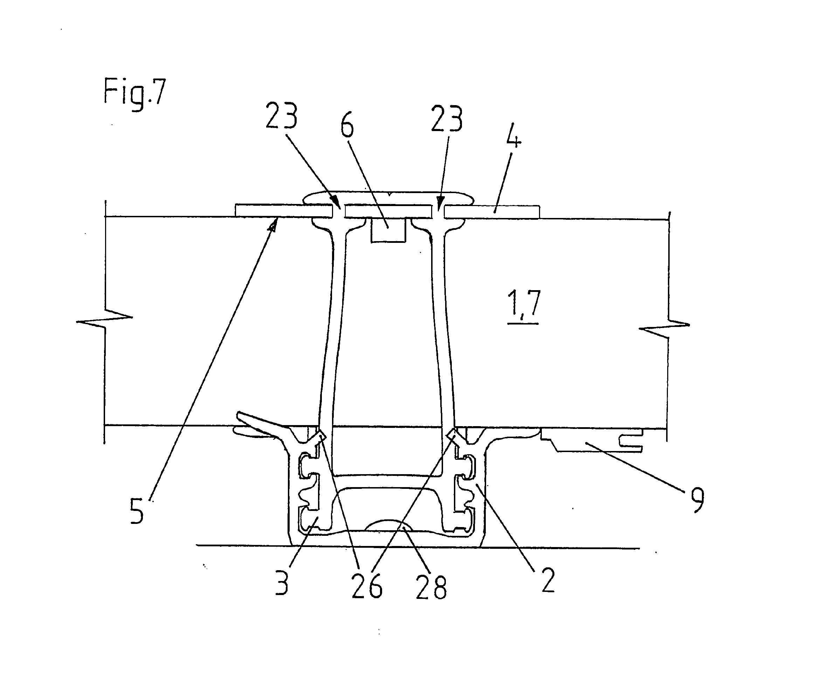

Fig. 7 zeigt eine Seitenansicht auf einen Teil des Randbereiches der Anordnung aus Fig. 1, und zwar konkret auf die Stirnseite eines Trägerprofilteilstücks 2 mit dem darin angeordneten letzten Klammerelement 3, 4. Wie zu erkennen ist, wird hier das Stegelement 3 des Klammerelements 3, 4, dessen Kopfelement 4 aufgrund der Positionierung am Rande des Solarfeldes nur einseitig ein Solarmodul 1 übergreift und dadurch auf dem Trägerprofilteilstück 2 befestigt, durch weitere plastische Verformungen 26 von Profilabschnitten des Trägerprofilteilstücks 2 am Ende desselben formschlüssig gegen ein Ausfahren aus dessen Profilkontur gesichert.

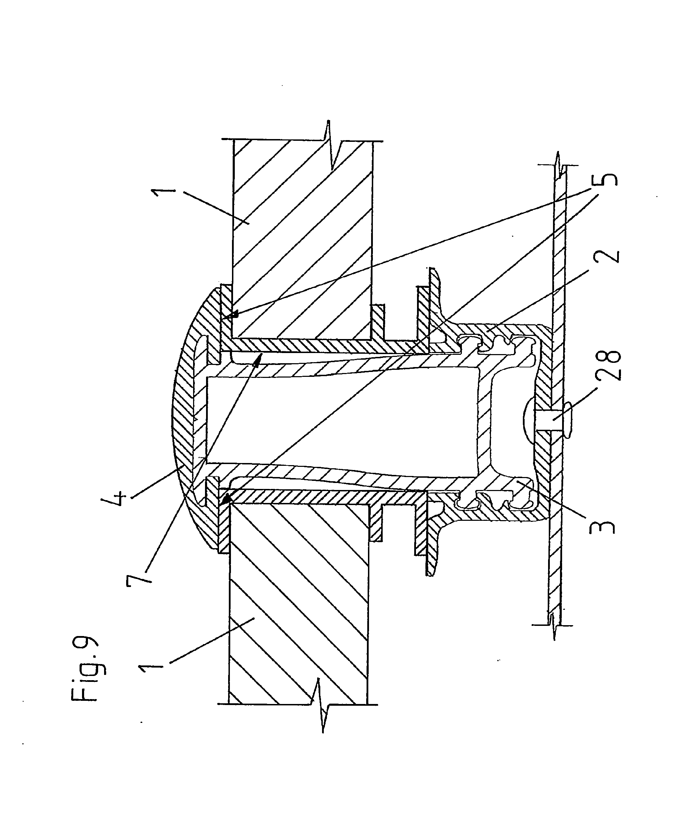

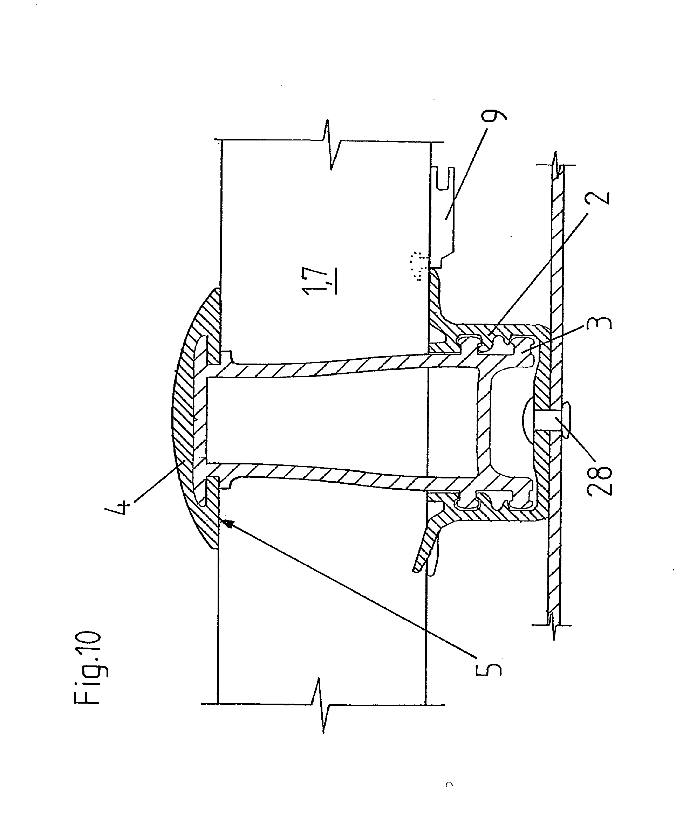

Die Figuren 9 und 10 zeigen Darstellungen wie Fig. 3 einer zweiten Anordnung, wobei in Fig. 10 wie auch in Fig. 3 die übergriffenen Begrenzungskanten der Solarmodule 1 quer zu den Trägerprofilteilstücken 2 verlaufen, während sie in Fig. 9 längs dazu verlaufen. Wie zu erkennen ist, besteht der wesentliche Unterschied zwischen der ersten erfindungsgemässen Anordnung gemäss den Figuren 1 bis 8 darin, dass das Kopfelement 4 hier aus einem einfachen Profilabschnitt gebildet ist, welcher in seiner bestimmungsgemässen Position sowohl in Profillängsrichtung des dieses tragenden Stegelements 3 als auch quer dazu über das Stegelement 3 übersteht und so wahlweise die in Fig. 9 oder die in Fig. 10 dargestellte Befestigungssituation ermöglicht.

Wie aus den Figuren 3, 7, 8 und 10 erkennbar ist, weisen die Solarmodule 1 in Einbausituationen, in welchen sie mit ihren Begrenzungskanten quer zu den Trägerprofilteilstücken 2 verlaufend auf den parallel zu der Traufkante 22 des Gebäudedaches verlaufenden Trägerprofilteilstücken 2 befestigt sind, auf ihrer Unterseite Anschlagelemente 9 auf, welche in Richtung zur Traufkante hin formschlüssig am jeweiligen Trägerprofilteilstück 2 anschlagen und dadurch als formschlüssige Abrutsch-Sicherung für das jeweilige Solarmodul 1 dienen.

Die Anschlagelemente 9 werden von erfindungsgemässen einstückigen, einhändig ohne Werkzeug montier - und demontierbaren Clips 9 aus rostfreiem Stahlblech gebildet.

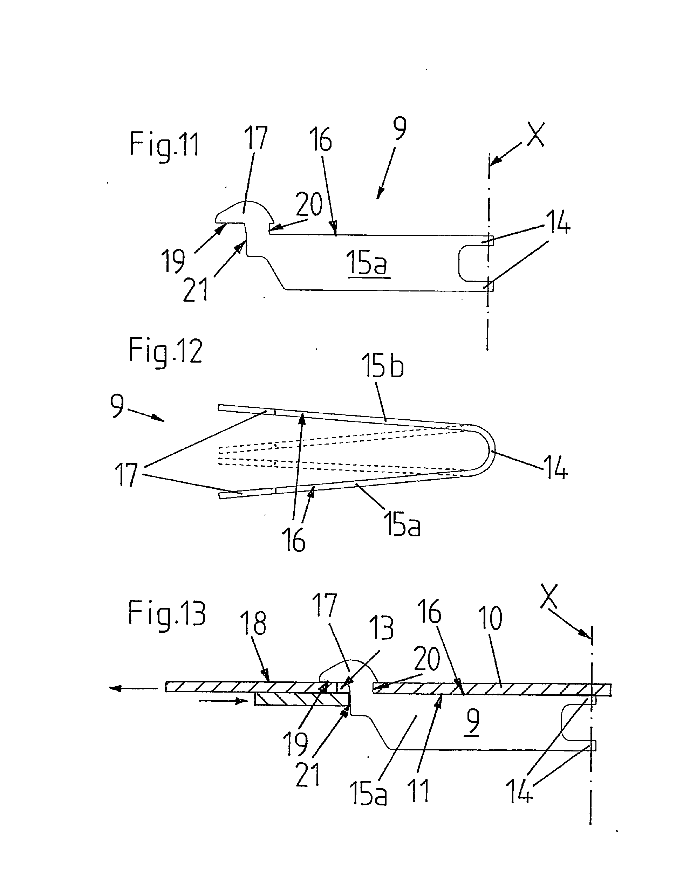

Die Figuren 11 bis 13 zeigen eine erste erfindungsgemässe Ausführungsform eines Clips 9, wie er in den Anordnungen in den Figuren 3 und 7 zum Einsatz kommt, einmal in einer Seitenansicht (Fig. 11), einmal in einer Draufsicht (Fig. 12) und einmal in einer anderen bestimmungsgemässen Einbausituation als in den Figuren 3 und 7 (Fig. 13).

Wie insbesondere auch aus Fig. 13 erkennbar wird, ist der Clip 9 geeignet zur Bildung eines Anschlagelements auf einer Aussenfläche 11 eines ebenen, dünnwandigen plattenförmigen Bauteils 10 unter Befestigung desselben in einer in dieser Aussenfläche 11 angeordneten, bevorzugterweise kreisrunden, rechteckigen oder langlochförmigen Öffnung 13, welche das Bauteil 10 durchdringt und in einer zweiten Aussenfläche 18 des Bauteils 10 endet, die im Wesentlichen parallel zur ersten Aussenfläche 11 ist.

Der Clip 9 ist einstückig aus einem Stanzteil gleichmässiger Materialstärke aus rostfreiem Stahl gebildet und weist zwei über einen Federabschnitt 14 federnd miteinander verbundene Schenkelabschnitte 15a, 15b auf, deren freie Enden in einem neutralen, also spannungsfreien Zustand beabstandet voneinander sind und unter Überwindung der Federkraft des Federabschnitts 14 aufeinander zu bewegbar sind, was in Fig. 12 mit den punktierten Linien angedeutet ist. Der Federabschnitt 14 ist von zwei parallelen Federstegen gebildet.

Die Schenkelabschnitte 15a, 15b bilden jeweils an ihren Oberseiten erste Anlageflächen 16, welche zusammen mit der Oberseite des Federabschnitts 14 eine einzige durchgehende gerade erste Anlagefläche 16 zur Anlage an der Aussenfläche 11 des Bauteils 10 bilden, an welcher mit dem Clip 9 ein Anschlagelement gebildet werden soll. Diese ersten Anlageflächen 16 der Schenkelabschnitte 15a, 15b bzw. die zusammen mit dem Federabschnitt 14 gebildete durchgehende Anlagefläche 16 definieren eine Anlageebene.

Wie weiter zu erkennen ist, enden die freien Enden der Schenkelabschnitte 15a, 15b jeweils in einem hakenartigen Befestigungsabschnitt 17, welcher über die Anlageebene hinaus steht.

Auf der Innenseite ihrer Hakenform bilden die hakenförmigen Befestigungsabschnitte 17 jeweils eine zweite Anlagefläche 19, welche sich mit einem Abstand parallel zu der Anlageebene erstreckt und zur Anlage an der zweiten Aussenfläche 18 des Bauteils 10 dient.

Auf der Aussenseite ihrer Hakenform bilden die hakenartigen Befestigungsabschnitte 17 jeweils eine im Wesentlichen senkrecht zur Anlageebene verlaufende erste Anschlagfläche 20, zur Bildung eines Anschlags in der Öffnung 13 gegen ein Verschieben des jeweiligen Schenkelabschnitt 15a, 15b in einer Richtung parallel zur Anlageebene.

Unterhalb der Anlageebene weisen die Schenkelabschnitte 15a, 15b jeweils eine von der ersten Anschlagfläche 20 abgewandte, im Wesentlichen senkrecht zur Anlageebene verlaufende zweite Anschlagfläche 21 auf, welche der Bildung der Anschlagflächen des durch den Clip 9 auf der ersten Aussenfläche 11 des Bauteils 10 gebildeten Anschlagelements dient.

Jeweils auf ihrer dem Federabschnitt 14 zugewandten Seite direkt anschliessend an die jeweilige erste Anschlagfläche 20 weisen die Befestigungsabschnitte 17 eine dritte Anlagefläche 22 auf, welche sich mit einem Abstand parallel zu der Anlageebene erstreckt und wie schon die zweite Anlagefläche 19 zur Anlage an der zweiten Aussenfläche 18 des Bauteils 10 dient. Auf der Aussenseite ihrer Hakenform weisen die hakenförmigen Befestigungsabschnitte 17 zudem jeweils eine gerundete, insbesondere kreisabschnittsförmige Form auf.

Wie zu erkennen ist, grenzen die zweiten Anlageflächen 19 und die zweiten Anschlagflächen 21 jeweils direkt aneinander an und sind dabei jeweils von senkrecht zueinander verlaufenden geraden Kanten der Schenkelabschnitte 15a, 15b gebildet.

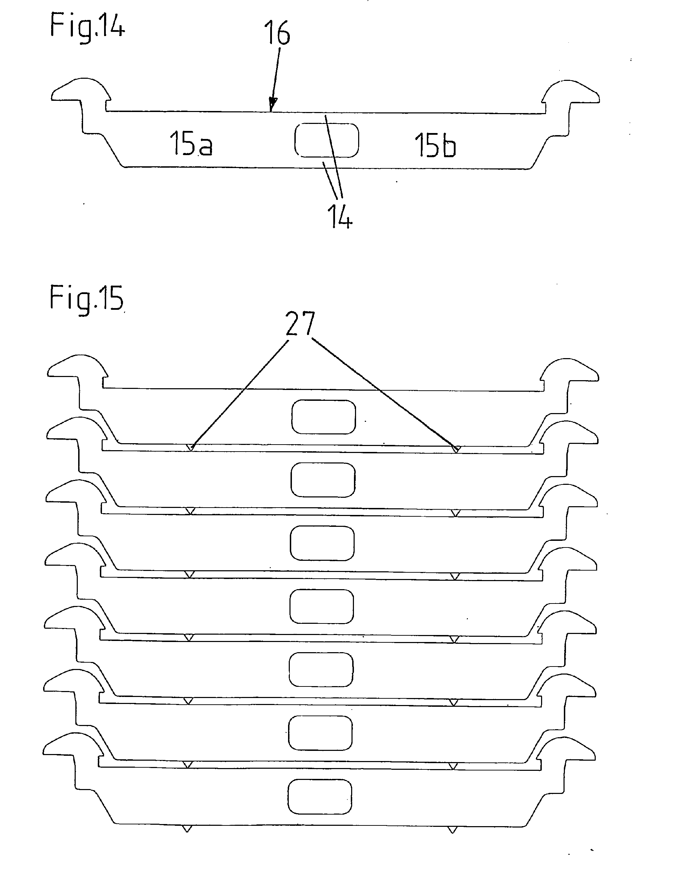

Fig. 14 zeigt eine Draufsicht auf das Stanzteil, aus welchem der Clip 9 durch Biegen im Bereich seines Federabschnitts 14 hergestellt wurde. Wie zu erkennen ist, sind die beiden Schenkelabschnitte 15a, 15b spiegelbildlich ausgebildet.

Fig. 15 zeigt eine Draufsicht auf ein Zwischenprodukt bei der Herstellung des Stanzteiles aus Fig. 14, aus welchem durch Vereinzeln der jeweils lediglich über zwei dünne Stege 27 miteinander verbundenen Teilelemente die Stanzteile gemäss Fig. 14 gewonnen werden. Wie hier deutlich zu erkennen ist, ist die Form der nach Vereinzelung die einzelnen Stanzteile gemäss Fig. 14 bildenden Teilelemente derartig gewählt, dass die Kontur der Unterseite des einzelnen Stanzteils im Wesentlichen als Gegenkontur zur Kontur der Oberseite des Stanzteils ausgebildet ist, so dass beim seriellen Stanzen kaum Abfallmaterial anfällt. Dies wird aus den nur sehr kleinen Lücken zwischen den Teilelementen ersichtlich.

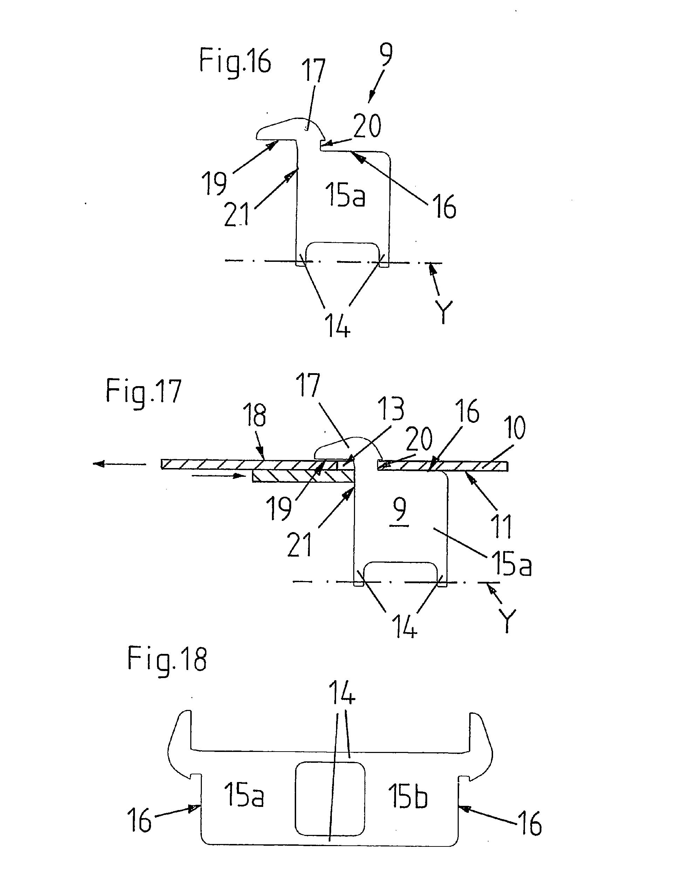

Die Figuren 16 bis 18 zeigen Darstellungen wie die Figuren 11, 13 und 14 eines zweiten erfindungsgemässen Clips 9, wie er in der Anordnung in Fig. 8 zum Einsatz kommt, bzw. des zur Bildung desselben verwendeten Stanzteils, wobei der einzige wesentliche Unterschied zwischen beiden Ausführungsformen darin besteht, dass bei der ersten Ausführungsform die Schenkelabschnitte 15a, 15b über den Federabschnitt 14 derartig federnd miteinander verbunden sind, dass sie bei Überwindung der Federkraft des Federabschnitts 14 um eine senkrecht zur Anlageebene verlaufende Schwenkachse X aufeinander zuschwenkbar sind, bei der zweiten Ausführungsform hingegen um eine parallel zu der Anlageebene verlaufende Schwenkachse Y.

Um bestimmungsgemäss wie in der Figuren 13 und 17 gezeigt mit den Clips 9 ein Anschlagelement an einer ebenen Aussenfläche eines dünnwandigen Bauteils zu bilden, werden die Befestigungsabschnitte 17 des jeweiligen Clips unter einem Aufeinanderzubewegen der Schenkelabschnitte 15a, 15b entgegen der Federkraft des Federabschnitts 14 derartig in der Öffnung 13 des Bauteils 10 angeordnet, dass die erste Anlagefläche 16 an der Aussenseite 11 des Bauteils 10 anliegt und die zweiten Anlageflächen 19 an der Seite 18 der Wandung des Bauteils 10, welche der ersten Aussenseite 11 gegenüberliegt, anliegen.

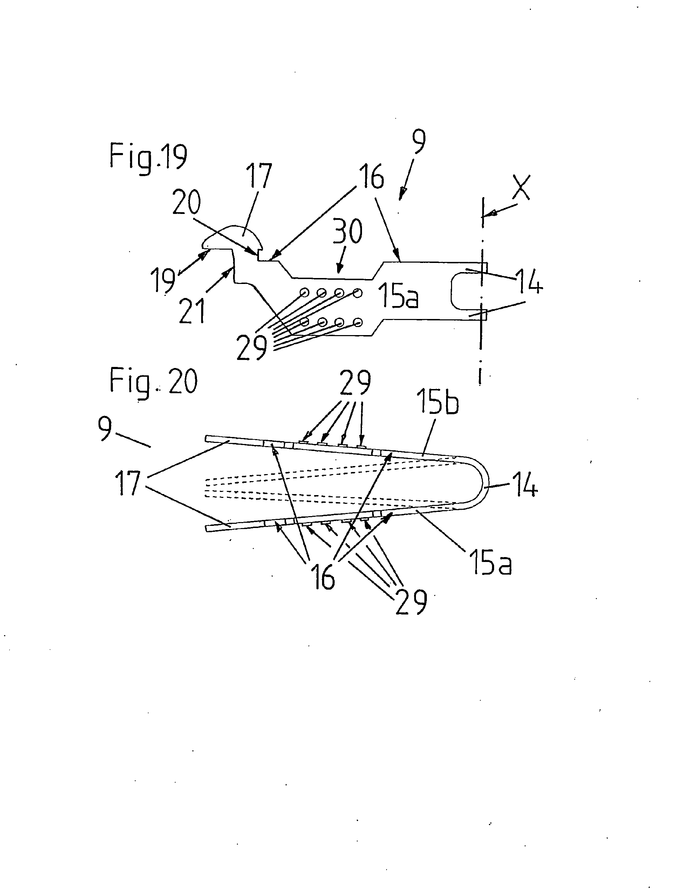

Die Figuren 19 und 20 zeigen eine dritte erfindungsgemässe Ausführungsform eines Clips 9, einmal in einer Seitenansicht (Fig. 19) und einmal in einer Draufsicht (Fig. 20). Dieser Clip 9 unterscheidet sich von dem in den Figuren 11 bis 13 dargestellten Clip im Wesentlichen dadurch, dass er in dem Bereich, in welchem er typischerweise für die Installation bzw. Demontage zwischen Daumen und Zeigefinger ergriffen wird, nach aussen vorstehende Prägungen 29 aufweist, wodurch seine Griffigkeit deutlich erhöht wird. Zudem ist dieser Bereich hier tiefer herabgezogen als bei der in den Figuren 11 bis 13 gezeigten Ausführungsform, wodurch sich die Handhabung des Clips 9 bei der Installation und Montage weiter verbessert, weil dieser Bereich des Clips 9 im bestimmungsgemäss installierten Zustand weiter von der Fläche 11 des Bauteils, auf welcher er einen Anschlag bildet, absteht. Ein weiterer Unterschied zu dem in den Figuren 11 bis 13 gezeigt Clip besteht darin, dass hier die Schenkelabschnitte 15a, 15b an ihren Oberseiten jeweils eine Vertiefung 30 aufweisen, so dass sie jeweils zwei separate Anlageflächen 16 bilden. Durch diese Vertiefung 30 weist die Oberseite des Stanzteils, aus welchem der Clip 9 durch Biegen im Bereich des Federabschnitts 14 hergestellt wird, im Wesentlichen die Gegenkontur zur Kontur seiner Unterseite auf, so dass die einzelnen Stanzteile beim aneinander gereihten Stanzen aus einem Materialband, wie dies wie für die Stanzteile der Ausführungsform gemäss den Figuren 11 bis 13 in Fig. 14 gezeigt ist, nur sehr wenig Abfallmaterial hinterlassen.

Während in der vorliegenden Anmeldung bevorzugte Ausführungen der Erfindung beschrieben sind, ist klar darauf hinzuweisen, dass die Erfindung nicht auf diese beschränkt ist und auch in anderer Weise innerhalb des Umfangs der nun folgenden Ansprüche ausgeführt werden kann.

## Patentansprüche

1. Clip (9) zur Bildung eines Anschlagelements auf einer ersten Aussenfläche (11) eines ebenen, dünnwandigen plattenförmigen Bauteils (10) unter Befestigung desselben in einer in dieser Aussenfläche (11) angeordneten, insbesondere kreisrunden, rechteckigen oder langlochförmigen Öffnung (13), welche das Bauteil (10) durchdringt und in einer zweiten Aussenfläche (18) des Bauteils (10) endet, die im Wesentlichen parallel zur ersten Aussenfläche (11) ist, umfassend zwei über einen Federabschnitt (14) federnd miteinander verbundene Schenkelabschnitte (15a, 15b), deren freie Enden in einem neutralen Zustand beabstandet voneinander sind und unter Überwindung der Federkraft des Federabschnitts (14) aufeinander zu bewegbar sind,
wobei die Schenkelabschnitte (15a, 15b) jeweils eine oder mehrere erste Anlageflächen (16) aufweisen, zur Anlage an der Aussenfläche (11) des Bauteils (10) bei bestimmungsgemässer Befestigung des Clips (9) am Bauteil (10), und wobei die ersten Anlageflächen (16) gemeinsam eine Anlageebene definieren,
wobei die freien Enden der Schenkelabschnitte (15a, 15b) jeweils in einem hakenartigen Befestigungsabschnitt (17) enden, welcher über die Anlageebene hinaus steht,
wobei die hakenartigen Befestigungsabschnitte (17) jeweils auf der Innenseite ihrer Hakenform eine zweite Anlagefläche (19), welche sich mit einem Abstand zu der durch die ersten Anlageflächen (16) definierten Anlageebene erstreckt, aufweisen, zur Anlage an der zweiten Aussenfläche (18) des Bauteils (10) bei bestimmungsgemässer Befestigung des Clips am Bauteil ( 10),
wobei die hakenartigen Befestigungsabschnitte (17) jeweils auf der Aussenseite ihrer Hakenform eine im Wesentlichen senkrecht zur Anlageebene verlaufende erste Anschlagfläche (20) aufweisen, zur Bildung eines Anschlags in der Öffnung (13) gegen ein Verschieben des jeweiligen Schenkelabschnitt (15a, 15b) in einer Richtung parallel zur Anlageebene bei bestimmungsgemässer Befestigung des Clips (9) am Bauteil (10),
und wobei die Schenkelabschnitte (15a, 15b) jeweils unterhalb der Anlageebene eine von der ersten Anschlagfläche (20) abgewandte, im Wesentlichen senkrecht zur Anlageebene verlaufende zweite Anschlagfläche (21) aufweisen, zur Bildung der Anschlagflächen des durch den Clip (9) bei bestimmungsgemässer Befestigung desselben auf der ersten Aussenfläche (11) des Bauteils (10) gebildeten Anschlagelements.

2. Clip nach Anspruch 1, wobei die Befestigungsabschnitte (17) jeweils auf ihrer dem Federabschnitt (14) zugewandten Seite, insbesondere direkt anschliessend an die jeweilige erste Anschlagfläche (20), eine dritte Anlagefläche (22) aufweisen, welche sich mit einem Abstand zu der durch die ersten Anlageflächen (16) definierten Anlageebene erstreckt, zur Anlage an der zweiten Aussenfläche (18) des Bauteils (10) bei bestimmungsgemässer Befestigung des Clips (9) am Bauteil (10).

3. Clip nach einem der vorangehenden Ansprüche, wobei die hakenartigen Befestigungsabschnitte (17) jeweils auf der Aussenseite ihrer Hakenform eine gerundete, insbesondere kreisabschnittsförmige Form aufweisen.

4. Clip nach einem der vorangehenden Ansprüche, wobei jeweils die zweiten Anlageflächen (19) und die zweiten Anschlagflächen (21) direkt aneinander angrenzen und insbesondere, wobei diese jeweils von senkrecht oder nahezu senkrecht zueinander verlaufenden geraden Kanten der Schenkelabschnitte (15a, 15b) gebildet werden.

5. Clip nach einem der vorangehenden Ansprüche, wobei jeweils die ersten Anlageflächen (16) von geraden Kanten der Schenkelabschnitte (15a, 15b) gebildet werden.

6. Clip nach einem der vorangehenden Ansprüche, wobei die Schenkelabschnitte (15a, 15b) zusammen mit dem Federabschnitt (14) eine einzige durchgehende erste Anlagefläche (16) bilden.

7. Clip nach einem der vorangehenden Ansprüche, wobei jeweils die zweiten (19) und/oder die dritten Anlageflächen (22), sofern vorhanden, von geraden, mit einem Abstand parallel zur Anlageebene verlaufenden Kanten der Befestigungsabschnitte (17) gebildet werden.

8. Clip nach einem der vorangehenden Ansprüche, wobei der Federabschnitt (14) von zwei voneinander insbesondere parallel beabstandeten Federstegen (23a, 23b) gebildet ist.

9. Clip nach einem der vorangehenden Ansprüche, wobei die Schenkelabschnitte (15a, 15b) spiegelbildlich ausgebildet sind.

10. Clip nach einem der vorangehenden Ansprüche, wobei der Clip einstückig ausgebildet ist.

11. Clip nach einem der vorangehenden Ansprüche, wobei die Schenkelabschnitte (15a, 15b) als ebene, flächige Abschnitte mit gleichbleibender Materialstärke ausgebildet sind.

12. Clip nach einem der vorangehenden Ansprüche, wobei der Clip aus einem Blechmaterial, insbesondere aus rostfreiem Stahl, gebildet ist.

13. Clip nach Anspruch 12, wobei der Clip einstückig durch Ausstanzen eines die beiden Schenkelabschnitte (15a, 15b) und den Federabschnitt (14) bildenden Stanzteils aus einem Blechmaterial und anschliessendes Biegen im Bereich des Federabschnittes (14) hergestellt ist.

14. Clip nach Anspruch 13, wobei die Form des Stanzteils derartig ist, dass die Kontur der Unterseite des Stanzteils im Wesentlichen als Gegenkontur zur Kontur der Oberseite des Stanzteils ausgebildet ist.

15. Verfahren zur Bildung eines Anschlagelements auf einer ebenen Aussenfläche eines dünnwandigen Bauteils, umfassend die Schritte:
a) Bereitstellen einer Öffnung (13) in der Aussenfläche (11) des Bauteils (10), welche die Wandung des Bauteils (10) durchdringt;
b) Bereitstellen eines Clips gemäss einem der Ansprüche 1 bis 14; und
c) Anordnen der Befestigungsabschnitte (17) des Clips unter einem Aufeinanderzubewegen der Schenkelabschnitte (15a, 15b) entgegen der Federkraft des Federabschnitts (14) derartig in der Öffnung (13), dass zumindest ein Teil der ersten Anlageflächen (16) an der Aussenseite (11) des Bauteils (10) anliegen und die zweiten Anlageflächen (19) an der Seite (18) der Wandung des Bauteils 10), welche der ersten Aussenseite (11) gegenüberliegt, anliegen.
